# EUROPÄISCHE PATENTSCHRIFT

(11) **EP 3 033 218 B1**
(45) Veröffentlichungstag und Bekanntmachung des Hinweises auf die Patenterteilung: **26.02.2020**
(21) Anmeldenummer: 14747562.8
(22) Anmeldetag: 28.07.2014
(51) Int. Cl.: B29C 65/02, B29C 65/78, B29C 65/48

(54) **VERFAHREN ZUR HERSTELLUNG EINES BAUTEILS AUS ORGANOBLECHEN**
METHOD FOR PRODUCING A COMPONENT FROM ORGANO SHEETS
PROCÉDÉ DE PRODUCTION D'UN ÉLÉMENT À PARTIR DE COMPOSITES A MATRICE THERMOPLASTIQUE RENFORCÉS PAR DES FIBRES

(30) Priorität: 16.08.2013 DE 102013013497
(43) Veröffentlichungstag der Anmeldung: 22.06.2016
(73) Patentinhaber: ThyssenKrupp Steel Europe AG, 47166 Duisburg (DE)
(72) Erfinder: PATBERG, Lothar, 47445 Moers (DE); MAYER, Stefan, 58239 Schwerte (DE); KRAHNERT, Torsten, 14554 Seddin (DE); HUFENBACH, Werner, 01324 Dresden (DE); LADUSCH, Enrico, 01187 Dresden (DE); WERNER, Jens, 01640 Coswig (DE); KIESSLING, André, 01307 Dresden (DE); HERBIG, Alexander, 01324 Dresden (DE); KIELE, Jörn, 01099 Dresden (DE); LEPPER, Martin, 01279 Dresden (DE)
(74) Vertreter: ThyssenKrupp Steel Europe AG
(86) Internationale Anmeldenummer: PCT/EP2014/066120
(87) Internationale Veröffentlichungsnummer: WO 2015/022174

(56) Entgegenhaltungen:
- WO-A1-2012/152936
- US-A1- 2012 269 999
- US-A1- 2013 149 491
- US-B1- 6 284 089

## Beschreibung

Die Erfindung betrifft ein Verfahren zur Herstellung eines Bauteils aus Organoblechen gemäß dem Oberbegriff des Anspruchs 1.

Ein derartiges Verfahren ist aus dem Dokument US 6 284 089 B1 bekannt.

Organobleche sind flächige Halbzeuge aus Faserverbundwerkstoff. Sie weisen eine thermoplastische Kunststoffmatrix auf, in die ein oder mehrere Fasergewebe und/oder ein oder mehrere Fasergelege eingebettet sind. Bei den zur Herstellung von Organoblechen verwendeten Fasern handelt es sich typischerweise um Glas-, Aramid- und Kohlenstofffasern, die als Endlosfasern oder Langfasern in die thermoplastische Kunststoffmatrix eingebracht werden. Die Faserlänge der Langfasern liegt dabei im Bereich von 1 bis 50 mm, während Fasern, die länger als 50 mm sind, als Endlosfasern bezeichnet werden. Organobleche mit Endlosfasern besitzen im Vergleich zu Organoblechen mit kürzeren Fasern die höchsten Steifigkeits- und Festigkeitswerte.

Die Fasern der in der thermoplastischen Kunststoffmatrix eingebetteten Fasergewebe und Fasergelege können auch quer, beispielsweise im Wesentlichen rechtwinklig zueinander verlaufen, so dass die Steifigkeit und die Festigkeit von Organoblech sogar höher als bei vielen metallischen Flacherzeugnissen eingestellt werden können. Organobleche besitzen hervorragende Leichtbaueigenschaften und werden daher zunehmend im Automobil- und Flugzeugbau, insbesondere im Elektrofahrzeugbau eingesetzt.

Für die Umformung von Organoblech ist ein zumindest partielles, d.h. ein zumindest lokales Anschmelzen (Aufschmelzen) der thermoplastischen Kunststoffmatrix erforderlich. Jedoch besteht hierbei das Problem, dass die Fasern, insbesondere wenn es sich um Endlosfasern handelt, aufgrund ihrer geringen Bruchdehnung die Umformbarkeit von Organoblech erheblich behindern. So kann es schon bei geringem Umformgrad zu Faserbrüchen und damit zu Schäden am herzustellenden Bauteil kommen. Üblicherweise werden daher in dem umzuformenden Organoblech bzw. der umzuformenden Bauteil-Vorform Einschnitte vorgesehen, um ein Abgleiten des Organoblechs während des Umformens zu ermöglichen. Auf diese Weise ergibt sich jedoch eine Materialschwächung, die beispielsweise durch Anbringen von zusätzlichen Zuschnitten, d.h. durch eine Schichtung einer Mehrzahl unterschiedlicher Zuschnitte abgemindert werden kann. Alternativ zu dieser Maßnahme kann das spätere Bauteil aus mehreren, geometrisch einfachen Einzelteilen durch Aneinanderkleben derselben zusammengesetzt werden. Dieses alternative Vorgehen erfordert allerdings zusätzliche Arbeitsschritte, wie Vorbereiten der Oberflächen der Fügezonen, das Auftragen von Klebstoff, das Fixieren der Einzelteile zueinander und ein Konsolidieren (Aushärten) des Klebstoffs.

Die US 6 284 089 B1 offenbart ein Verfahren zum Verbinden von thermoplastischen Verbundplatten durch thermoplastische Schweißnähte, beispielsweise zur Herstellung von Flugzeugaußenhautteilen. Die verwendeten Verbundplatten weisen eine faserverstärkte thermoplastische Matrix auf. Dabei werden überlappende Fügezonen, insbesondere fingerartige Verbindungsbereiche erzeugt, die mit entsprechenden Verbindungsbereichen ineinandergreifend verschweißt werden.

Aus der WO 2012/152936 A1 ist ein Verfahren zur Herstellung einer Verbundplatte bekannt, bei dem mehrere Verbundplatten, die jeweils einen Kern und zwei äußere Decklagen aufweisen, an ihren Seitenkanten aneinandergelegt und durch Heißsiegeln miteinander verbunden werden. Dabei wird mindestens ein Streifen aus Verstärkungsmaterial auf den jeweiligen Verbindungsbereich zweier benachbarter Verbundplatten aufgebracht und an den Platten befestigt. Ferner werden in den Decklagen an den zu verbindenden Seitenkanten der Verbundplatten stufenförmige Vertiefungen ausgebildet, in welche die Streifen aus Verstärkungsmaterial eingelegt werden, wobei die Außenseite des eingelegten Streifens flächenbündig mit der Außenseite der Decklagen abschließt. Des Weiteren ist bei diesem Verfahren ein Umformen der verbundenen Verbundplatten vorgesehen. Hierzu werden vor dem Umformen in den Verbindungsbereich, der nach dem Umformen eine Hohlkehle definiert, parallel zu den benachbarten Seitenkanten verlaufende Einkerbungen eingebracht.

Die US 2013/0149491 A1 offenbart ein Verfahren zur Herstellung eines Gegenstandes aus einem unidirektionalen Band, welches eine unidirektionale, mit Polymerharz imprägnierte Endlosfaser aufweist. Hierzu wird ein kontinuierlicher Abschnitt des kalten unidirektionalen Bandes abgewickelt und zu einer geschlossenen Schleife vorgeformt, die eine Vielzahl geschichteter Endlosfaserlagen aufweist. Diese gewickelte Schleife (Vorform) wird diskontinuierlich durch Erhitzen und Anwendung von Druck verschweißt und ausgehärtet.

Die US 2012/0269999 A1 offenbart ein gattungsgemäßes Verfahren zur Herstellung eines Bauteils aus Organoblechen.

Davon ausgehend lag der Erfindung die Aufgabe zugrunde, ein Verfahren der eingangs genannten Art anzugeben, mittels dem sich relativ große, dreidimensional ausgebildete Bauteile aus Organoblech mit hohen, vorzugsweise sehr hohen Steifigkeits- und Festigkeitswerte wirtschaftlich herstellen lassen. Insbesondere lag der Erfindung die Aufgabe zugrunde, ein Verfahren der eingangs genannten Art dahingehend zu verbessern, dass es einen hohen Automatisierungsgrad sowie eine hohe Produktivität bietet und damit eine Kostenreduzierung in der Herstellung von Bauteilen aus Organoblechen ermöglicht.

Gelöst wird diese Aufgabe durch ein Verfahren mit den in Anspruch 1 angegebenen Merkmalen. Bevorzugte und vorteilhafte Ausgestaltungen des erfindungsgemäßen Verfahrens sind in den Unteransprüchen angegeben.

Das erfindungsgemäße Verfahren umfasst folgende Verfahrensschritte:
- Aneinandersetzen von mindestens zwei Organoblechen zu einer Bauteil-Vorform,
- Ausbilden mindestens einer überlappenden Fügezone, in welcher die aneinandergesetzten Organobleche unter Verwendung mindestens eines als Organoblech ausgeführten Verbindungsteils aneinandergeheftet werden,
- Überführen der aus den aneinander gehefteten Organoblechen gebildeten Bauteil-Vorform zu einem oder in ein Fügewerkzeug,
- Verbinden der Organobleche der Bauteil-Vorform mittels des Fügewerkzeuges durch zumindest lokales Anschmelzen und Verpressen der Fügezone zwischen den Organoblechen, und
- Konsolidieren des gefügten Bauteils, indem zumindest die Fügezone konsolidiert wird, und ist dadurch gekennzeichnet, dass die zwei Organobleche zwei Organoblechsegmente definieren, welche entlang ihrer Stoßkanten unter Ausbildung einer Stoßfuge aneinander gesetzt werden, und das Aneinanderheften der Organobleche unter Verwendung einer Transfervorrichtung, welche die zu der Bauteil-Vorform aneinanderzusetzenden Organobleche mittels Greifer, vorzugsweise Nadel- und/oder Sauggreifer aufnimmt, durchgeführt wird, und dass die Bauteil-Vorform während des Verpressens der Fügezone zumindest teilweise in eine andere geometrische Struktur umgeformt wird.

Durch die erfindungsgemäße Lösung lassen sich relativ große, dreidimensional ausgebildete Bauteile aus Organoblech mit hohen sowie sehr hohen Steifigkeits- und Festigkeitswerte wirtschaftlich herstellen.

Bei einem erfindungsgemäß hergestellten Bauteil ist zwar die Faseranordnung, d.h. der Faserverlauf in den Fügezonen unterbrochen, durch die Kraftumlagerung in die Faserstruktur des jeweiligen als Organoblech ausgeführten Verbindungselements, das beispielsweise band- oder winkelprofilförmig ausgebildet ist, wird jedoch eine signifikant höhere Tragfähigkeit erreicht. Die Kanten des Verbindungselements, insbesondere seine Längskanten, sind vorzugsweise abgeschrägt, so dass die band- oder flachstabförmigen Verbindungselemente ein trapezförmiges Querschnittsprofil aufweisen, wobei die breitere Fläche des Profils als Fügefläche verwendet wird.

Erfindungsgemäß wird also das Bauteil aus einzelnen plattenförmigen, nicht oder nur gering gekrümmten Organoblechen zusammengesetzt, die unter Verwendung mindestens eines als Organoblech ausgeführten, überlappend angeordneten Verbindungselements zunächst lokal aneinandergeheftet werden. Hierzu werden die zu verbindenden Elemente (Organobleche) vorzugsweise lokal erwärmt und mittels einer aufzubringenden Kraft lokal verbunden (angeheftet). Dieser Prozessschritt kann außerhalb des Fügewerkzeuges, mittels dem das weitere zumindest lokale Anschmelzen (Aufschmelzen) und Verpressen der Fügezone zwischen den Organoblechen durchgeführt wird, stattfinden und trägt so zu gesteigerter Produktivität bei. Die lokale Erwärmung zum Aneinanderheften der Organobleche wird vorzugsweise durch lokales Schweißen mittels Reib-, Kontakt-, Ultraschall- oder Laserschweißens durchgeführt. Eine zuverlässige partielle Verbindung (Heftverbindung) wird insbesondere dann erreicht, wenn nach einer weiteren Ausgestaltung der Erfindung vor und/oder während des Aneinanderheftens der Organobleche dieselben auf eine Temperatur unterhalb oder oberhalb ihrer Schmelztemperatur erwärmt werden.

Alternativ oder ergänzend kann das Aneinanderheften der Organobleche auch unter Verwendung von mechanischen Verbindungsmitteln, beispielsweise metallischen Klammern erfolgen. Es wird jeweils eine ausreichend eigenstabile Bauteil-Vorform erzeugt, die bereits transferiert werden kann.

Nach dem Transfer der Bauteil-Vorform in das Fügewerkzeug oder zu diesem erfolgt das eigentliche Verbinden der Organobleche mittels des Fügewerkzeuges durch zumindest lokales Anschmelzen und Verpressen der Fügezone zwischen den Organoblechen. Das Anschmelzen der Organobleche in der Fügezone zum Verbinden der Organobleche der Bauteil-Vorform wird dabei beispielsweise durch Anwendung eines Heißluftstrahls, von Ultraschall-Schweißen, eines Infrarot-Heizstrahlers, einer induktiven Heizvorrichtung oder einer Kontaktheizung durchgeführt. Die Fügekraft zum Verpressen der Fügezone wird in weiterer Ausgestaltung der Erfindung vorzugsweise mittels eines Presswerkzeuges aufgebracht, das Teil einer hydraulischen Pressanlage, eines Roboters oder einer durch Hydraulikzylinder angesteuerten Vorrichtung zum lokalen Verpressen ist.

Das Konsolidieren des gefügten Bauteils bzw. der Fügezone erfolgt in dem Fügewerkzeug bzw. Presswerkzeug. Zum Konsolidieren wird das gefügte Bauteil bzw. die Fügezone auf eine Temperatur unterhalb der Schmelztemperatur oder Rekristallisierungstemperatur der Organobleche abgekühlt.

Zur Erzielung eines leichten, dreidimensional geformten Bauteils mit sehr hoher Steifigkeit sowie Festigkeit werden bei dem erfindungsgemäßen Verfahren vorzugsweise Organobleche verwendet, deren thermoplastische Matrix Endlosfasern enthält. Alternativ oder ergänzend können aber auch Organobleche verwendet werden, deren thermoplastische Matrix Langfasern enthält.

Eine andere vorteilhafte Ausgestaltung des erfindungsgemäßen Verfahrens ist dadurch gekennzeichnet, dass die oder mindestens eine der Fügezonen beidseitig mit als Organoblech ausgeführten Verbindungsteilen versehen wird. Auf diese Weise lässt sich eine besonders hohe Tragfähigkeit im Bereich der betreffenden Fügezone durch Kraftumlagerung in die Faserstruktur der beiden Verbindungsteile erzielen, die beispielsweise bandförmig oder vorzugsweise winkelprofilförmig ausgebildet sind. Die faserverstärkten thermoplastischen Verbindungsteile können dabei unterschiedliche Leisten- bzw. Stegdicken aufweisen, um das herzustellende Bauteil im Sinne des Leichtbaus an die im späteren Einsatz zu erwartende Materialbeanspruchung optimal anzupassen. Alternativ oder ergänzend können die beiden faserverstärkten Verbindungsteile hierzu unterschiedliche Faserorientierungen, Faserlängen und/oder Fasergehalte aufweisen.

Eine weitere vorteilhafte Ausgestaltung der Erfindung sieht vor, dass vor und/oder während des Aneinanderheftens der Organobleche Verstärkungsmaterial in die Fügezone eingebracht und/oder auf mindestens eines der Organobleche aufgebracht wird. Auch hierdurch lässt sich die Tragfähigkeit im Bereich der betreffenden Fügezone verbessern. Als Verstärkungsmaterial kann dabei beispielsweise mindestens ein Blech, vorzugsweise Lochblech, mindestens ein Profil aus metallischem oder faserverstärktem Werkstoff, mindestens eine langfaserverstärkte thermoplastische Pressmasse und/oder mindestens ein Zuschnitt aus faserverstärktem thermoplastischem Kunststoff verwendet werden.

Das Anschmelzen (Aufschmelzen) der Organobleche zur ergänzenden, eigentlichen Verbindung derselben kann erfindungsgemäß auch in der Weise durchgeführt wird, dass die Bauteil-Vorform insgesamt angeschmolzen wird. Dies ist insbesondere dann zweckmäßig, wenn die Bauteil-Vorform während des Verpressens der Fügezone zumindest teilweise in eine andere geometrische Struktur umgeformt werden soll bzw. wird.

Das erfindungsgemäße Verfahren bietet folgende Vorteile:
- Die Lagerung und Handhabung der Organobleche (Organoblechsegmente) ist unkompliziert;
- Es lassen sich bei Verwendung von endlosfaserverstärkten Organoblechsegmenten komplexe dreidimensionale Bauteilgeometrien mit hohen sowie sehr hohen Steifigkeits- und Festigkeitswerte realisieren;
- Es kann auf den Einsatz von teurem Klebstoff verzichtet werden;
- Die Konsolidierung in einem einzelnen Prozessschritt verringert den Nachbearbeitungsaufwand gegenüber dem Verkleben mehrerer Organoblechsegmente;
- Bei der Verwirklichung des erfindungsgemäßen Verfahrens lässt sich ein hoher Automatisierungsgrad erzielen;
- Das bzw. die als Organoblech ausgeführten Verbindungsteile können in Form eines Flach- oder Winkelprofils in einem Strangpressprozess kontinuierlich und relativ kostengünstig erzeugt werden;
- Unterschiedliche Leisten- bzw. Profilquerschnitte können dabei durch den Wechsel vergleichsweise kostengünstiger Matrizen im gleichen Strangpresswerkzeug erzeugt werden;
- Unter Verwendung von einfachen, insbesondere flachen Organoblechsegmenten sind dreidimensionale Bauteilgeometrien im Wesentlichen ohne Verschnitt herstellbar;
- Da das Fügen der Organobleche und der als Organoblech ausgeführten Verbindungsteile nur lokal erfolgt, muss auch nur dort Kraft und thermische Energie aufgewendet werden. Damit ergibt sich ein energetisch effizienterer Prozess als beispielsweise beim Pressen und Umformen eines einstückigen, großflächigen Organoblechs. Ferner können somit auch einfachere, leichtere und damit kostengünstigere Werkzeuge oder Haltesysteme verwendet werden als beim Umformen eines einstückigen, großflächigen Organobleches mittels entsprechend großer und schwerer Presswerkzeuge;
- Es kann für jede Teilfläche des herzustellenden Bauteils ein Organoblech mit gewünschter, insbesondere unterschiedlicher Faserorientierung und/oder unterschiedlicher Dicke verwendet werden, wohingegen dies beim Umformen eines einstückigen (monolithischen) Organoblechs mit vorgegebener Faserorientierung kaum möglich ist;
- Es lassen sich durch relativ einfach gestaltete Haltesysteme auch hinterschnittene Bauteilgeometrien fertigen, was beim Umformen eines monolithischen Organoblechs in einem Pressprozess nicht oder nur mit hohem technischem Aufwand zu realisieren ist.

Nachfolgend wird die Erfindung anhand einer mehrere Ausführungsbeispiele darstellenden Zeichnung näher erläutert. Es zeigen schematisch:
- Fig. 1 bis 4: verschiedene Ausführungsbeispiele von miteinander erfindungsgemäß verbundenen Organoblechen, in einer Schnittansicht;
- Fig. 5a bis 5c: eine Pressvorrichtung zum Anschmelzen (Aufschmelzen) und Verpressen von unter Verwendung von Verbindungsleisten aneinander gehefteten Organoblechen, in einer Schnittansicht; und
- Fig. 6a und 6b: ein erfindungsgemäß hergestelltes Bauteil mit dreidimensionaler Geometrie in perspektivischer Darstellung bzw. Organoblechsegmente, aus denen ein solches Bauteil zusammengesetzt wird, in Draufsicht.

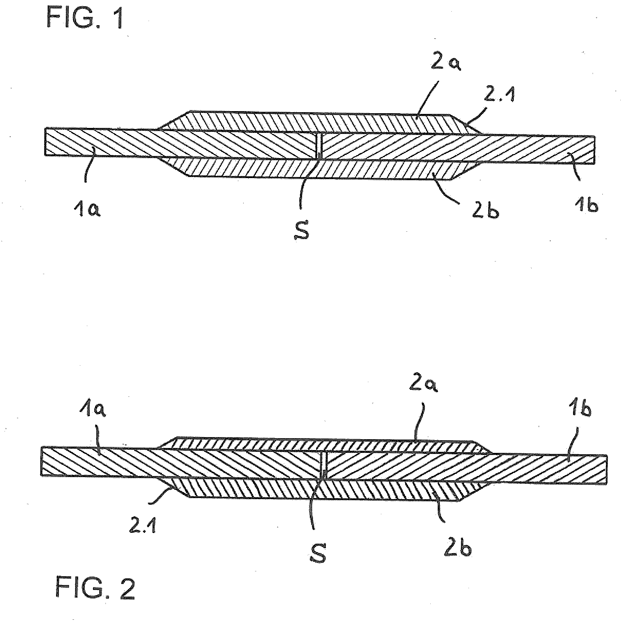

Den in den Figuren 1 bis 4 dargestellten Ausführungsbeispielen liegt ein biegebelasteter Kragarm zu Grunde, der aus zwei plattenförmigen Organoblechsegmenten 1a, 1b zusammengesetzt wird. Die beiden Organoblechsegmente 1a, 1b sind durch band- oder winkelprofilförmige Verbindungselemente 2a, 2b miteinander verbunden, die ebenfalls aus Organoblech bestehen. Aufgrund des thermoplastischen Faserverbundwerkstoffs der Verbindungleisten 2a, 2b ergeben sich unterschiedliche mechanische Eigenschaften in Zug- und Druckrichtung. Die Verbindungsleisten 2a, 2b weisen vorzugsweise abgeschrägte Längskanten 2.1 bzw. ein trapezförmiges Querschnittsprofil auf, wobei die breitere Fläche des Profils als Fügefläche dient. Die Organoblechsegmente 1a, 1b können im Wesentlichen gleiche Eigenschaften aufweisen oder sich hinsichtlich ihrer Dicke, Faserorientierung, Faserlänge und/oder ihres Fasergehaltes voneinander unterscheiden.

Bei dem Ausführungsbeispiel gemäß Fig. 1 sind plattenförmige Organoblechsegmente 1a, 1b entlang ihrer Stoßkanten aneinandergesetzt und durch zwei aus Organoblech gefertigte Verbindungsleisten 2a, 2b, die beidseitig der Stoßfuge S angeordnet sind und die Organoblechsegmente 1a, 1b überlappen, stoffschlüssig miteinander verbunden. Die Verbindungsleisten 2a, 2b weisen in diesem Fall die gleiche Dicke auf. Sie sind im Wesentlichen symmetrisch zu der Stoßfuge S angeordnet.

Das in Fig. 2 gezeigte Ausführungsbeispiel unterscheidet sich von Beispiel gemäß Fig. 1 dadurch, dass die bandförmigen Verbindungsleisten 2a, 2b der plattenförmigen Organoblechsegmente 1a, 1b unterschiedliche Dicken aufweisen. Zudem können sich die faserverstärkten Verbindungsleisten 2a, 2b auch hinsichtlich ihrer Faserorientierung voneinander unterscheiden.

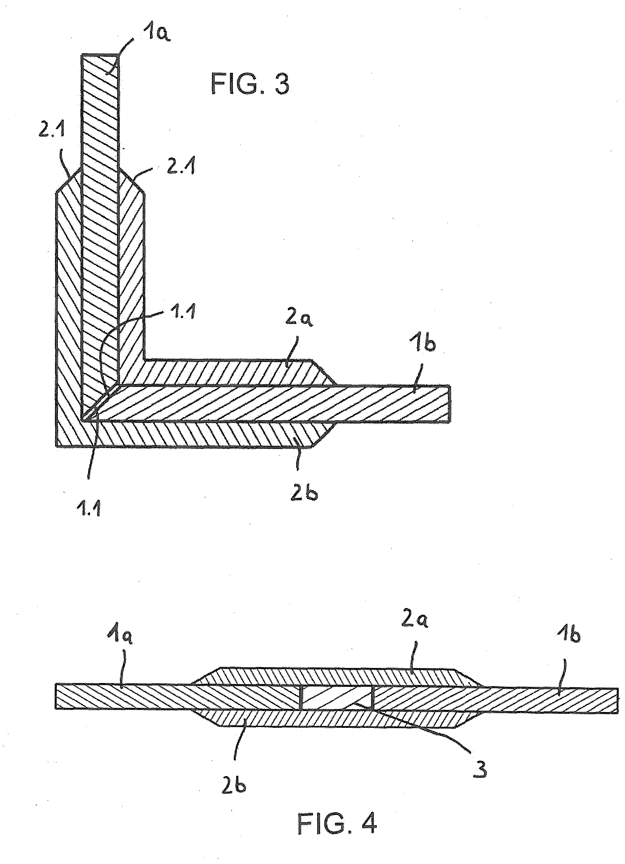

In dem in Fig. 3 gezeigten Ausführungsbeispiel sind die miteinander zu verbindenden Organoblechsegmente 1a, 1b winklig zueinander angeordnet. Sie können beispielsweise einen 90°-Winkel einschließen. Ebenso können die Organoblechsegmente 1a, 1b aber auch so zueinander angeordnet werden, dass sie einen stumpfen oder spitzen Winkel einschließen. Die einander zugewandten Kanten 1.1 der Organoblechsegmente 1a, 1b sind dabei vorzugsweise entsprechend abgeschrägt. Beispielsweise weisen sie eine Abschrägung von ca. 45° auf, wenn die Organoblechsegmente unter einem Winkel von ca. 90° zueinander angeordnet werden. Die ebenfalls aus thermoplastischem Faserverbundwerkstoff (Organoblech) bestehenden Verbindungselemente 2a, 2b sind als Winkelprofile ausgebildet, die einen entsprechenden Winkel definieren.

Die Herstellung der bandförmigen bzw. winkelförmigen Verbindungselemente 2a, 2b erfolgt vorzugsweise durch Strangpressen (Stranggießen). Verbindungselemente 2a, 2b mit unterschiedlichen Querschnittsformen können dabei durch den Austausch entsprechender Matrizen im gleichen Strangpresswerkzeug hergestellt werden.

Das in Fig. 4 gezeigte Ausführungsbeispiel unterscheidet sich von den Ausführungsbeispielen der Figuren 1 bis 3 dadurch, dass in den Verbindungsbereich der Organoblechsegmente 1a, 1b ein metallisches Einlegeteil 3, insbesondere ein Stahl- oder Leichtmetallprofil integriert wird. Das Einlegeteil 3 kann beispielsweise als Verstärkungselement bzw. der Anbindung von Funktionselementen an dem Bauteil dienen.

In Abwandlung der in den Fig. 1 bis 4 dargestellten Ausführungsbeispiele liegt es auch im Rahmen der Erfindung, eine band- oder winkelprofilförmige Verbindungsleiste 2a oder 2b lediglich auf einer Seite der zu verbindenden Organoblechsegmente 1a, 1b anzubringen.

Die stoffschlüssige Verbindung der Organoblechsegmente 1a, 1b mit den band- oder winkelprofilförmigen Verbindungsleisten 2a, 2b erfolgt in mindestens zwei Schritten. Zunächst werden die aneinandergesetzten Organoblechsegmente 1a, 1b mit der oder den überlappend angeordneten Verbindungsleisten 2a, 2b durch Anheften partiell verbunden, so dass sich eine im Wesentlichen eigenstabile Bauteil-Vorform ergibt. Das Anheften erfolgt vorzugsweise durch lokales Schweißen, beispielsweise durch lokales Ultraschall-, Reib-, Laser- oder Kontaktschweißen. Sodann wird die Bauteil-Vorform zu einem oder in ein Fügewerkzeug transferiert, mittels dem durch zumindest lokales Aufschmelzen (Anschmelzen) und Verpressen der Fügezonen zwischen den Organoblechsegmenten 1a, 1b dieselben ergänzend und damit abschließend miteinander verbunden werden.

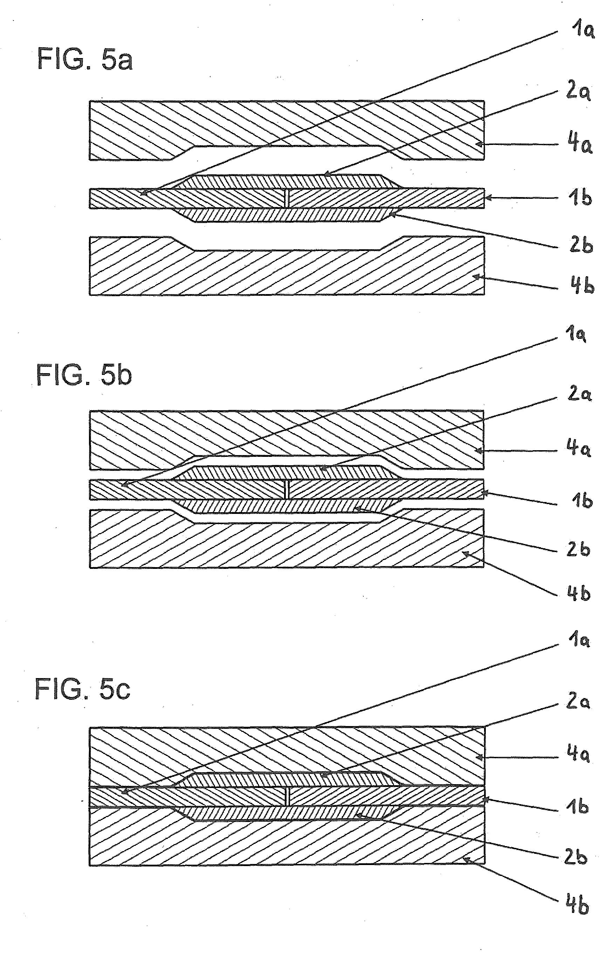

In den Figuren 5a bis 5c ist der prinzipielle Aufbau einer Fügevorrichtung zum partiellen Aufschmelzen und Verpressen einer Fügezone von an Verbindungsleisten 2a, 2b angehefteten Organoblechsegmenten 1a, 1b. Die Fügevorrichtung weist ein aus einem Oberwerkzeug 4a und einem Unterwerkzeug 4b aufgebautes Presswerkzeug auf. Das Oberwerkzeug 4a und das Unterwerkzeug 4b sind relativ zueinander beweglich und mittels Hydraulikzylinder (nicht gezeigt) heb- und senkbar. In dem Presswerkzeug ist eine Vorrichtung (nicht gezeigt) zum Aufschmelzen der Fügezone integriert. Alternativ kann die Vorrichtung zum Aufschmelzen der Fügezone auch dem Presswerkzeug vorgeordnet sein. Das Aufschmelzen (Anschmelzen) der Organobleche 1a, 1b, 2a, 2b in der Fügezone erfolgt beispielsweise mittels Heißluft, Ultraschall-Schweißen, Infrarot-Strahlung, Wirbelstrom (Induktion) oder einer Kontaktheizung.

Anschließend wird das gefügte Bauteil konsolidiert, indem zumindest die aufgeschmolzenen Fügezonen zwangsgekühlt werden. Dies kann innerhalb der Fügevorrichtung, insbesondere innerhalb des Presswerkzeuges 4a, 4b, oder außerhalb desselben erfolgen.

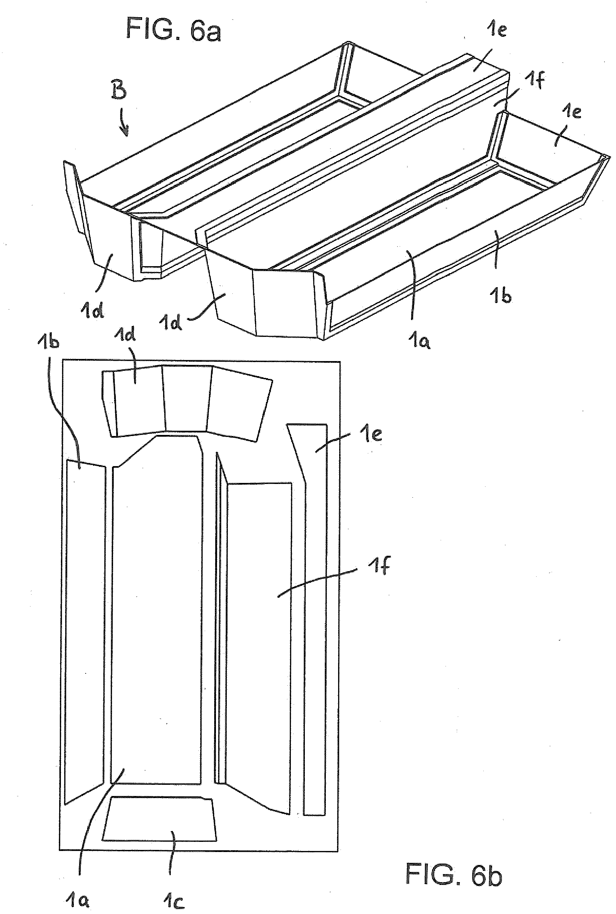

In den Figuren 6a und 6b sind ein erfindungsgemäß hergestelltes Bauteil B und einzelne Organoblechsegmente 1a, 1b, 1c, 1d, 1e, 1f, aus denen ein solches Bauteil B zusammengesetzt wird, dargestellt. Bei dem Bauteil B handelt es sich beispielsweise um eine Bodengruppe eines Kraftfahrzeuges. Die Grundflächen 1a, Seiten- und Innenwände 1b, 1c, 1d, 1e sowie Brückenplatten 1f des Bauteils B werden von Stapeln, die jeweils eine Vielzahl entsprechender Organoblech-Einzelteile umfassen, abgenommen und auf einer Haltevorrichtung (nicht gezeigt) zueinander positioniert. In einem nachfolgenden Verfahrensschritt werden ebene und winkelförmige Verbindungsleisten 2a, 2b aus Organoblech über den Stoßstellen der zu einer Bauteil-Vorform aneinandergesetzten Einzelteile positioniert und mittels eines ortsveränderlichen Heftwerkzeuges (nicht gezeigt) an den Einzelteilen 1a bis 1f angeheftet. Das Heftwerkzeug ist hierzu beispielsweise mit einem Ultraschall-Schweißkopf oder einem anderen geeigneten Mittel zum lokalen Aufschmelzen (Anheften) der Organoblechsegmente 1a - 1f und Organoblech-Verbindungsleisten 2a, 2b versehen. Nach Abkühlen der lokalen, relativ kleinen Fügestellen entstehen stoffschlüssige Verbindungsstellen, die der Bauteil-Vorform eine ausreichende Eigenstabilität verleihen, so dass sie in ein Füge-bzw. Presswerkzeug transferiert werden kann. Dort erfolgt ein ergänzendes und somit vervollständigendes stoffschlüssiges Fügen der Organoblechsegmente 1a bis 1f und Verbindungsleisten 2a, 2b durch zumindest lokales Anschmelzen und abschließendes Konsolidieren.

Die Ausführung der Erfindung ist nicht auf die in der Zeichnung dargestellten Ausführungsbeispiele beschränkt. Vielmehr sind weitere Varianten denkbar, die auch bei von den Ausführungsbeispielen abweichender Gestaltung von der in den beiliegenden Ansprüchen angegebenen Erfindung Gebrauch machen. Beispielsweise liegt es im Rahmen der Erfindung, Merkmale der in der Zeichnung dargestellten verschiedenen Ausführungsbeispiele untereinander zu kombinieren.

## Patentansprüche

1. Verfahren zur Herstellung eines Bauteils (B) aus Organoblechen, **gekennzeichnet durch** folgende Verfahrensschritte:
- Aneinandersetzen von mindestens zwei Organoblechen (1a, 1b; 1a bis 1f) zu einer Bauteil-Vorform,
- Ausbilden mindestens einer überlappenden Fügezone, in welcher die aneinandergesetzten Organobleche (1a, 1b; 1a bis 1f) unter Verwendung mindestens eines als Organoblech ausgeführten Verbindungsteils (2a, 2b) aneinandergeheftet werden,
- Überführen der aus den aneinander gehefteten Organoblechen (1a, 1b, 2a, 2b; 1a bis 1f, 2a, 2b) gebildeten Bauteil-Vorform zu einem oder in ein Fügewerkzeug (4a, 4b),
- Verbinden der Organobleche (1a, 1b, 2a, 2b; 1a bis 1f, 2a, 2b) der Bauteil-Vorform mittels des Fügewerkzeuges durch zumindest lokales Anschmelzen und Verpressen der Fügezone zwischen den Organoblechen (1a, 1b, 2a, 2b; 1a bis 1f, 2a, 2b), und
- Konsolidieren des gefügten Bauteils (B), indem zumindest die Fügezone konsolidiert wird,
**dadurch gekennzeichnet, dass**
die zwei Organobleche (1a, 1b; 1a bis 1f) zwei Organoblechsegmente (1a, 1b; 1a bis 1f) definieren, welche entlang ihrer Stoßkanten unter Ausbildung einer Stoßfuge (S) aneinander gesetzt werden, und das Aneinanderheften der Organobleche (1a, 1b, 2a, 2b; 1a bis 1f, 2a, 2b) unter Verwendung einer Transfervorrichtung, welche die zu der Bauteil-Vorform aneinanderzusetzenden Organobleche (1a, 1b, 2a, 2b; 1a bis 1f, 2a, 2b) mittels Greifer, vorzugsweise Nadel- und/oder Sauggreifer aufnimmt, durchgeführt wird, und dass die Bauteil-Vorform während des Verpressens der Fügezone zumindest teilweise in eine andere geometrische Struktur umgeformt wird.

2. Verfahren nach Anspruch 1, **dadurch gekennzeichnet, dass** als Organobleche (1a, 1b) solche verwendet werden, deren thermoplastische Matrix Endlosfasern oder Langfasern enthält.

3. Verfahren nach Anspruch 1 oder 2, **dadurch gekennzeichnet, dass** die oder mindestens eine der Fügezonen beidseitig mit als Organoblech ausgeführten Verbindungsteilen (2a, 2b) versehen wird.

4. Verfahren nach einem der Ansprüche 1 bis 3, **dadurch gekennzeichnet, dass** das Aneinanderheften der Organobleche (1a, 1b, 2a, 2b; 1a bis 1f, 2a, 2b) durch lokales Schweißen mittels Reib-, Kontakt-, Ultraschall- oder Laserschweißens durchgeführt wird.

5. Verfahren nach einem der Ansprüche 1 bis 4, **dadurch gekennzeichnet, dass** das Aneinanderheften der Organobleche (1a, 1b, 2a, 2b; 1a bis 1f, 2a, 2b) unter Verwendung von mechanischen Verbindungsmitteln, insbesondere metallischen Klammern durchgeführt wird.

6. Verfahren nach einem der Ansprüche 1 bis 5, **dadurch gekennzeichnet, dass** vor und/oder während des Aneinanderheftens der Organobleche (1a, 1b, 2a, 2b; 1a bis 1f, 2a, 2b) Verstärkungsmaterial in die Fügezone eingebracht und/oder auf mindestens eines der Organobleche (1a, 1b, 2a, 2b; 1a bis 1f, 2a, 2b) aufgebracht wird.

7. Verfahren nach Anspruch 6, **dadurch gekennzeichnet, dass** als Verstärkungsmaterial mindestens ein Blech, vorzugsweise Lochblech, mindestens ein Profil aus metallischem oder faserverstärktem Werkstoff, mindestens eine langfaserverstärkte thermoplastische Pressmasse und/oder mindestens ein Zuschnitt aus faserverstärktem Kunststoff verwendet werden.

8. Verfahren nach einem der Ansprüche 1 bis 7, **dadurch gekennzeichnet, dass** vor und/oder während des Aneinanderheftens der Organobleche (1a, 1b, 2a, 2b; 1a bis 1f, 2a, 2b) dieselben auf eine Temperatur unterhalb oder oberhalb ihrer Schmelztemperatur erwärmt werden.

9. Verfahren nach einem der Ansprüche 1 bis 8, **dadurch gekennzeichnet, dass** das Anschmelzen der Organobleche (1a, 1b, 2a, 2b; 1a bis 1f, 2a, 2b) in der Fügezone zum Verbinden der Organobleche der Bauteil-Vorform mittels des Fügewerkzeuges durch Anwendung eines Heißluftstrahls, von Ultraschall-Schweißen, eines Infrarot-Heizstrahlers, einer induktiven Heizvorrichtung oder einer Kontaktheizung durchgeführt wird.

10. Verfahren nach einem der Ansprüche 1 bis 9, **dadurch gekennzeichnet, dass** das Anschmelzen der Organobleche (1a, 1b, 2a, 2b; 1a bis 1f, 2a, 2b) in der Weise durchgeführt wird, dass die Bauteil-Vorform insgesamt angeschmolzen wird.

11. Verfahren nach einem der Ansprüche 1 bis 10, **dadurch gekennzeichnet, dass** als Fügewerkzeug ein Presswerkzeug (4a, 4b) verwendet wird, das Teil einer hydraulischen Pressanlage oder einer durch Hydraulikzylinder angesteuerten Vorrichtung zum lokalen Verpressen ist.

12. Verfahren nach einem der Ansprüche 1 bis 11, **dadurch gekennzeichnet, dass** das Konsolidieren des gefügten Bauteils (B) durch Abkühlen auf eine Temperatur unterhalb der Schmelztemperatur der Organobleche (1a, 1b, 2a, 2b; 1a bis 1f, 2a, 2b) durchgeführt wird.

13. Verfahren nach einem der Ansprüche 1 bis 11, **dadurch gekennzeichnet, dass** das Konsolidieren des gefügten Bauteils (B) durch Abkühlen auf eine Temperatur unterhalb der Rekristallisierungstemperatur der Organobleche (1a, 1b, 2a, 2b; 1a bis 1f, 2a, 2b) durchgeführt wird.

## Claims

1. Method for producing a component (B) from organic sheets, **characterized by** the following method steps:
- placing at least two organic sheets (1a, 1b; 1a to 1f) against one another to form a component preform,
- forming at least one overlapping joining zone, in which the organic sheets (1a, 1b; 1a to 1f) which are placed against one another are tacked to one another using at least one connecting part (2a, 2b) which is configured as an organic sheet,
- transferring the component preform which is formed from the organic sheets (1a, 1b, 2a, 2b; 1a to 1f, 2a, 2b) which are tacked to one another to or into a joining tool (4a, 4b),
- connecting the organic sheets (1a, 1b, 2a, 2b; 1a to 1f, 2a, 2b) of the component preform by means of the joining tool by way of at least local melting, and compressing of the joining zone between the organic sheets (1a, 1b, 2a, 2b; 1a to 1f, 2a, 2b), and
- consolidating the joined component (B), by at least the joining zone being consolidated,
**characterized in that** the two organic sheets (1a, 1b; 1a to 1f) define two organic sheet segments (1a, 1b; 1a to 1f) which are set against one another along their abutting edges to form a joint gap (S), and the tacking of the organic sheets (1a, 1b, 2a, 2b; 1a to 1f, 2a, 2b) to one another is carried out using a transfer apparatus which receives the organic sheets (1a, 1b, 2a, 2b; 1a to 1f, 2a, 2b) to be set against one another to form the component preform, by means of grippers, preferably needle and/or suction grippers, and that the component preform is reshaped at least partially into a different geometric structure during the compression of the joining zone.

2. Method according to Claim 1, **characterized in that** the organic sheets (1a, 1b) which are used are such that their thermoplastic matrix contains endless fibers or long fibers.

3. Method according to Claim 1 or 2, **characterized in that** the joining zone or at least one of the joining zones is provided on both sides with connecting parts (2a, 2b) which are configured as an organic sheet.

4. Method according to one of Claims 1 to 3, **characterized in that** the tacking of the organic sheets (1a, 1b, 2a, 2b; 1a to 1f, 2a, 2b) to one another is carried out by way of local welding by means of rotary friction, contact, ultrasonic or laser welding.

5. Method according to one of Claims 1 to 4, **characterized in that** the tacking of the organic sheets (1a, 1b, 2a, 2b; 1a to 1f, 2a, 2b) to one another is carried out using mechanical connecting means, in particular metallic clips.

6. Method according to one of Claims 1 to 5, **characterized in that**, before and/or while the organic sheets (1a, 1b, 2a, 2b; 1a to 1f, 2a, 2b) are tacked to one another, reinforcing material is introduced into the joining zone and/or is applied to at least one of the organic sheets (1a, 1b, 2a, 2b; 1a to 1f, 2a, 2b).

7. Method according to Claim 6, **characterized in that** at least one metal sheet, preferably a perforated metal sheet, at least one profile made from metallic or fiber-reinforced material, at least one fiber-reinforced thermoplastic molding compound and/or at least one blank made from fiber-reinforced plastic are/is used as reinforcing material.

8. Method according to one of Claims 1 to 7, **characterized in that**, before and/or while the organic sheets (1a, 1b, 2a, 2b; 1a to 1f, 2a, 2b) are tacked to one another, they are heated to a temperature below or above their melting point.

9. Method according to one of Claims 1 to 8, **characterized in that** the melting of the organic sheets (1a, 1b, 2a, 2b; 1a to 1f, 2a, 2b) in the joining zone in order to connect the organic sheets of the component preform by means of the joining tool is carried out by way of the application of a hot air jet, of ultrasonic welding, of an infrared radiant heater, of an inductive heating apparatus or of a contact heater.

10. Method according to one of Claims 1 to 9, **characterized in that** the melting of the organic sheets (1a, 1b, 2a, 2b; 1a to 1f, 2a, 2b) is carried out in such a way that the component preform is melted in its entirety.

11. Method according to one of Claims 1 to 10, **characterized in that** a pressing tool (4a, 4b) is used as joining tool, which pressing tool (4a, 4b) is part of a hydraulic pressing system or of an apparatus for local compression which is actuated by way of hydraulic cylinders.

12. Method according to one of Claims 1 to 11, **characterized in that** the consolidation of the joined component (B) is carried out by way of cooling to a temperature below the melting point of the organic sheets (1a, 1b, 2a, 2b; 1a to 1f, 2a, 2b).

13. Method according to one of Claims 1 to 11, **characterized in that** the consolidation of the joined component (B) is carried out by way of cooling to a temperature below the recrystallization temperature of the organic sheets (1a, 1b, 2a, 2b; 1a to 1f, 2a, 2b).

## Revendications

1. Procédé de production d'un élément (B) à partir de composites à matrice thermoplastique renforcés par des fibres, **caractérisé par** les étapes de procédé suivantes :
- juxtaposition d'au moins deux composites à matrice thermoplastique renforcés par des fibres (1a, 1b ; 1a à 1f) pour former une préforme d'élément,
- réalisation d'au moins une zone d'assemblage à recouvrement dans laquelle les composites à matrice thermoplastique renforcés par des fibres (1a, 1b ; 1a à 1f) juxtaposés sont fixés les uns aux autres en utilisant au moins une partie de liaison (2a, 2b) réalisée sous forme de composite à matrice thermoplastique renforcé par des fibres,
- transfert de la préforme d'élément formée à partir des composites à matrice thermoplastique renforcés par des fibres (1a, 1b, 2a, 2b ; 1a à 1f, 2a, 2b) fixés les uns aux autres jusqu'à un outil d'assemblage (4a, 4b) ou dans celui-ci,
- liaison des composites à matrice thermoplastique renforcés par des fibres (1a, 1b, 2a, 2b ; 1a à 1f, 2a, 2b) de la préforme d'élément au moyen de l'outil d'assemblage par fusion et compression au moins locales de la zone d'assemblage entre les composites à matrice thermoplastique renforcés par des fibres (1a, 1b, 2a, 2b ; 1a à 1f, 2a, 2b), et
- consolidation de l'élément assemblé (B), par le fait qu'au moins la zone d'assemblage est consolidée,
**caractérisé en ce que** les deux composites à matrice thermoplastique renforcés par des fibres (1a, 1b ; 1a à 1f) définissent deux segments (1a, 1b ; 1a à 1f) de composite à matrice thermoplastique renforcé par des fibres, lesquels sont placés l'un contre l'autre le long de leurs arêtes de butée en formant un joint bout à bout (S), et la fixation les uns aux autres des composites à matrice thermoplastique renforcés par des fibres (1a, 1b, 2a, 2b ; 1a à 1f, 2a, 2b) est effectuée en utilisant un dispositif de transfert, lequel reçoit les composites à matrice thermoplastique renforcés par des fibres (1a, 1b, 2a, 2b ; 1a à 1f, 2a, 2b) à placer les uns contre les autres pour former la préforment d'élément au moyen de dispositifs de préhension, de préférence au moyen de dispositifs de préhension à aiguilles et/ou à aspiration, et **en ce que** la préforme d'élément est déformée au moins partiellement dans une autre structure géométrique pendant la compression de la zone d'assemblage.

2. Procédé selon la revendication 1, **caractérisé en ce qu'**on utilise comme composites à matrice thermoplastique renforcés par des fibres (1a, 1b) ceux dont la matrice thermoplastique contient des fibres sans fin ou des fibres longues.

3. Procédé selon la revendication 1 ou 2, **caractérisé en ce que** la zone d'assemblage ou au moins l'une des zones d'assemblage est dotée bilatéralement de parties de liaison (2a, 2b) réalisées comme composite à matrice thermoplastique renforcé par des fibres.

4. Procédé selon l'une des revendications 1 à 3, **caractérisé en ce que** la fixation les uns aux autres des composites à matrice thermoplastique renforcés par des fibres (1a, 1b, 2a, 2b ; 1a à 1f, 2a, 2b) est effectuée par soudage local par le biais d'un soudage par friction, par contact, par ultrasons ou au laser.

5. Procédé selon l'une des revendications 1 à 4, **caractérisé en ce que** la fixation les uns aux autres des composites à matrice thermoplastique renforcés par des fibres (1a, 1b, 2a, 2b ; 1a à 1f, 2a, 2b) est effectuée en utilisant des moyens de liaison mécaniques, en particulier des attaches métalliques.

6. Procédé selon l'une des revendications 1 à 5, **caractérisé en ce qu'**avant et/ou pendant la fixation les uns aux autres des composites à matrice thermoplastique renforcés par des fibres (1a, 1b, 2a, 2b ; 1a à 1f, 2a, 2b), un matériau de renforcement est introduit dans la zone d'assemblage et/ou est appliqué sur au moins l'un des composites à matrice thermoplastique renforcés par des fibres (1a, 1b, 2a, 2b ; 1a à 1f, 2a, 2b).

7. Procédé selon la revendication 6, **caractérisé en ce qu'**on utilise en tant que matériau de renforcement au moins une tôle, de préférence une tôle perforée, au moins un profilé en matière métallique ou renforcée par des fibres, au moins une matière moulable thermoplastique renforcée par des fibres longues et/ou au moins une pièce découpée en une matière synthétique renforcée par des fibres.

8. Procédé selon l'une des revendications 1 à 7, **caractérisé en ce qu'**avant et/ou pendant la fixation les uns aux autres des composites à matrice thermoplastique renforcés par des fibres (1a, 1b, 2a, 2b ; 1a à 1f, 2a, 2b), ceux-ci sont chauffés à une température inférieure ou supérieure à leur température de fusion.

9. Procédé selon l'une des revendications 1 à 8, **caractérisé en ce que** la fusion des composites à matrice thermoplastique renforcés par des fibres (1a, 1b, 2a, 2b ; 1a à 1f, 2a, 2b) dans la zone d'assemblage pour relier les composites à matrice thermoplastique renforcés par des fibres de la préforme d'élément est effectuée au moyen de l'outil d'assemblage en utilisant un jet d'air chaud, un soudage par ultrasons, un dispositif de chauffage radiant à infrarouges, un dispositif de chauffage par induction ou un chauffage par contact.

10. Procédé selon l'une des revendications 1 à 9, **caractérisé en ce que** la fusion des composites à matrice thermoplastique renforcés par des fibres (1a, 1b, 2a, 2b ; 1a à 1f, 2a, 2b) est effectuée de telle sorte que la préforme d'élément est fondue dans son ensemble.

11. Procédé selon l'une des revendications 1 à 10, **caractérisé en ce qu'**on utilise en tant qu'outil d'assemblage un outil de pressage (4a, 4b) qui fait partie d'une installation de presse hydraulique ou d'un dispositif de compression locale commandé par des cylindres hydrauliques.

12. Procédé selon l'une des revendications 1 à 11, **caractérisé en ce que** la consolidation de l'élément assemblé (B) est effectuée par refroidissement à une température inférieure à la température de fusion des composites à matrice thermoplastique renforcés par des fibres (1a, 1b, 2a, 2b ; 1a à 1f, 2a, 2b).

13. Procédé selon l'une des revendications 1 à 11, **caractérisé en ce que** la consolidation de l'élément assemblé (B) est effectuée par refroidissement à une température inférieure à la température de recristallisation des composites à matrice thermoplastique renforcés par des fibres (1a, 1b, 2a, 2b ; 1a à 1f, 2a, 2b).
